# EUROPÄISCHE PATENTSCHRIFT

(11) **EP 0 522 337 B1**
(45) Veröffentlichungstag und Bekanntmachung des Hinweises auf die Patenterteilung: **24.05.1995**
(21) Anmeldenummer: 92110463.4
(22) Anmeldetag: 20.06.1992
(51) Int. Cl.: F16B 7/04, E06B 3/96, E04B 2/76, E05B 17/20

(54) **Vorrichtung zum Verbinden und Verriegeln zweier Elemente**
Device for fastening and locking two elements
Dispositif pour la jonction et le verrouillage de deux éléments

(30) Priorität: 29.06.1991 DE 4121596; 08.04.1992 DE 4211796
(43) Veröffentlichungstag der Anmeldung: 13.01.1993
(73) Patentinhaber: Neu, Manfred, D-66440 Blieskastel (DE)
(72) Erfinder: Brünet, Stephan, W-6640 Merzig (DE); Neu, Manfred, W-6653 Blieskastel (DE)
(74) Vertreter: Serwe, Karl-Heinz, Dipl.-Ing.

(56) Entgegenhaltungen:
- EP-A- 86 761
- DE-A- 3 129 597
- FR-A- 1 503 131
- FR-A- 2 194 292
- FR-A- 2 209 416
- US-A- 2 961 077

## Beschreibung

Die Erfindung betrifft eine Vorrichtung zum Verbinden und Verriegeln zweier Elemente, bei der das eine Element an seinem Verbindungsende eine stirnseitige Anlagefläche und einen Haken hat, der die Anlagefläche überragt und der eine Haltefläche hat, und bei der das andere Element eine Platte zur Anlage der stirnseitigen Anlagefläche des einen Elementes hat, die Durchtrittsöffnungen für den Haken und eine Widerlagerfläche für die Haltefläche des Hakens hat, wobei eine Fläche des Hakens einer Fläche der Durchtrittsöffnung zugeordnet ist und wobei in dem einen Element ein Exzenter-Nocken drehbar und arretierbar angeordnet ist, der zur Verschiebung des Hakens in eine zugeordnete Ausnehmung des Hakens eingreift.

Aus der EP-A-0 086 761 ist eine derartige Vorrichtung bekannt, die einen winkelförmigen Haken aufweist. Durch diesen Haken sind die Elemente in lotrechter Richtung lediglich in Richtung der Wirkung der Schwerkraft gesichert. Aus der US-A-2,961,077 ist ein kurvenförmiger Haken bekannt, mit dem die Elemente form- und kraftschlüssig miteinander verbunden werden. Auch bei dieser bekannten Vorrichtung erfolgt die Kraftübertragung zwischen den Elementen über den Haken.

Es soll eine derartige Verriegelungsvorrichtung vorgeschlagen werden, bei der die Elemente kraft- und formschlüssig miteinander verbunden und verriegelt sind, wobei bei einfacher Handhabung und kostengünstiger Herstellung ein sicherer Zusammenhalt der Elemente gewährleistet ist.

Diese Aufgabe wird gemäß Anspruch 1 dadurch gelöst, daß auf der Platte des anderen Elementes eine die Platte überragende Arretierscheibe mit Durchtrittsöffnungen für den Haken fest angeordnet ist, die in verriegelter Stellung der Elemente formschlüssig in eine zugeordnete stirnseitige Ausnehmung der Anlagefläche des einen Elementes eingreift.

Vorzugsweise ist die Arretierscheibe mit der Platte des anderen Elementes verklebt oder fest verbunden. Vorteilhaft sind die zu verriegelnden Elemente Hohlprofile und ist die Arretierscheibe gleich dem Innenquerschnitt der Hohlprofile ausgebildet.

Bei einer weiteren Ausführungsform gemäß Anspruch 4 ist der Haken derartig U-förmig ausgebildet, daß er im Abstand zur Lagerfläche eine Anschlagfläche aufweist, die in verriegelter Stellung des Hakens an einer zugeordneten Verriegelungsfläche der Platte des anderen Elementes anliegt.

Vorzugsweise sind die Lagerfläche und die Haltefläche des Hakens in einem Winkel von 90° zueinander angeordnet.

Vorteilhaft ist die Anschlagfläche im Haken parallel und im Abstand zur Lagerfläche verlaufend angeordnet.

Vorzugsweise sind die Auflagerfläche und die Widerlagerfläche in der Platte des anderen Elementes in einem Winkel von 90° zueinander angeordnet.

Vorzugsweise sind die Auflagerfläche und die Verriegelungsfläche der Platte im Abstand und parallel zueinander verlaufend angeordnet.

Der Haken ist vorteilhaft in einem Winkel von 90° zur Anlagerfläche im Element 1 angeordnet.

Vorteilhaft ist der Exzenter-Nocken in Arretierstellung von einem federbelasteten Stift od.dgl. gehalten.

Vorzugsweise sind im Element zwei Haken im Abstand und parallel zueinander geführt. Vorzugsweise sind der bzw. die Haken in einer Halteführung verschiebbar angeordnet, die in einer Ausnehmung eines Elementes einsetzbar ist. Vorteilhaft sind die Halteführung und die Haken im Element durch den drehbar im Element angeordneten Exzenter-Nocken gehalten.

Die Erfinung ist in den Zeichnungen beispielhaft dargestellt. Es zeigen:
- Fig. 1: die Vorrichtung in entriegelter Stellung im Längsschnitt,
- Fig. 2: die Vorrichtung in verriegelter Stellung im Längsschnitt,
- Fig. 3: die Vorrichtung in perspektivischer Darstellung in verriegelter Stellung in teilweisem Längsschnitt,
- Fig. 4: eine Halteführung für die Haken der Vorrichtung in perspektivischer Darstellung,
- Fig. 5: die Vorrichtung in verriegelter Stellung im Querschnitt,
- Fig. 6: eine andere Ausführungsform einer Vorrichtung in verriegelter Stellung im Schnitt mit Rechteckprofilen und einer festverbundenen Arretierscheibe mit der Platte und
- Fig. 7: die Vorrichtung gemäß der Ausführungsform nach Fig. 6 in verriegelter Stellung in verschiedenen Schnitten mit Rundhohlprofilen.

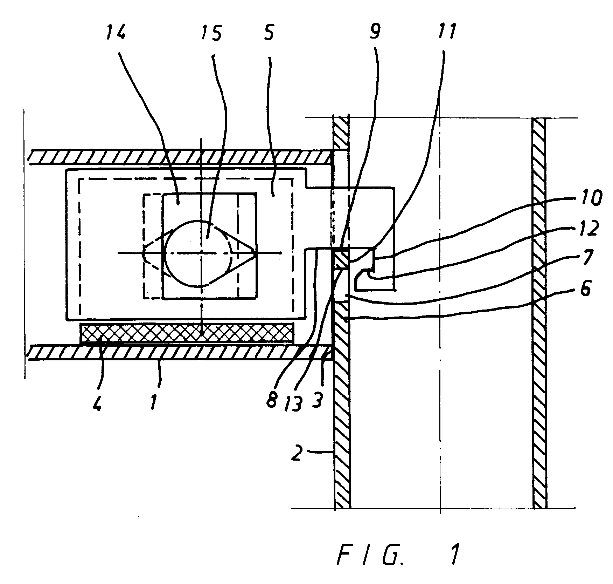

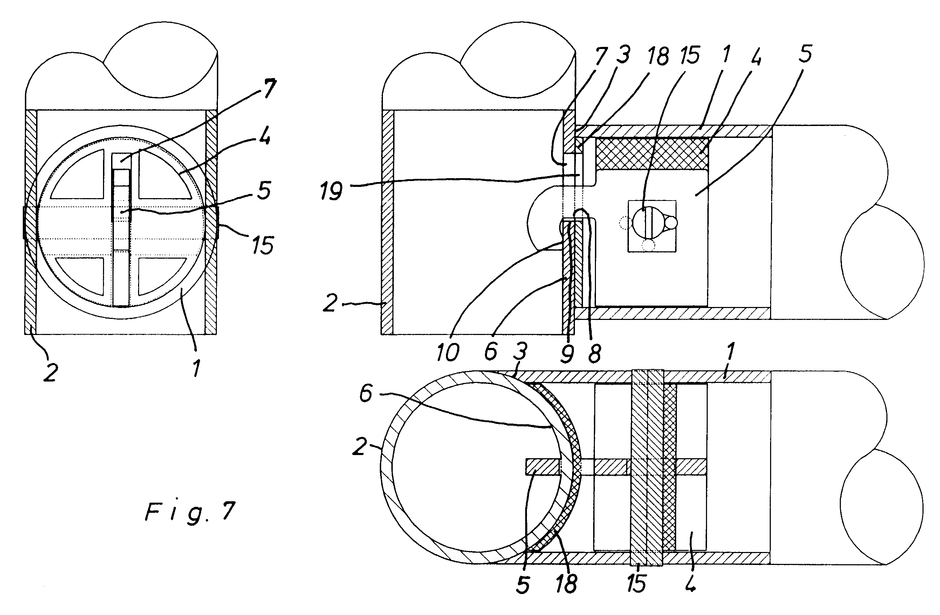

Nach den Figuren 1 bis 6 findet die erfindungsgemäße Vorrichtung zum Verbinden und Verriegeln zweier Elemente Anwendung bei rohrförmigen Elementen 1 und 2 mit rechteckigem Querschnitt und nach der Fig. 7 bei rohrförmigen Elementen 1 und 2 mit rundem Querschnitt.

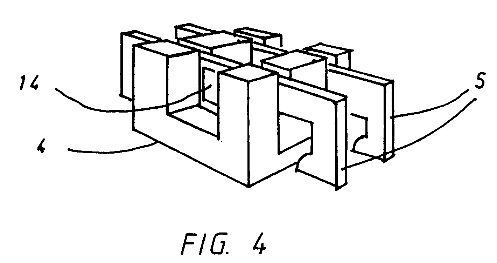

Das eine Element 1 hat an seinem Verbindungsende eine Anlagefläche 3 (Fig. 1, 2, 6 und 7), die in einem Winkel von 90° zur Längsrichtung des Elementes verläuft. In das Element 1 ist eine Halteführung 4 (Fig. 4) eingesetzt, in der zwei Haken 5 im Abstand zueinander in Längsrichtung des Elementes 1 verschiebbar geführt sind.

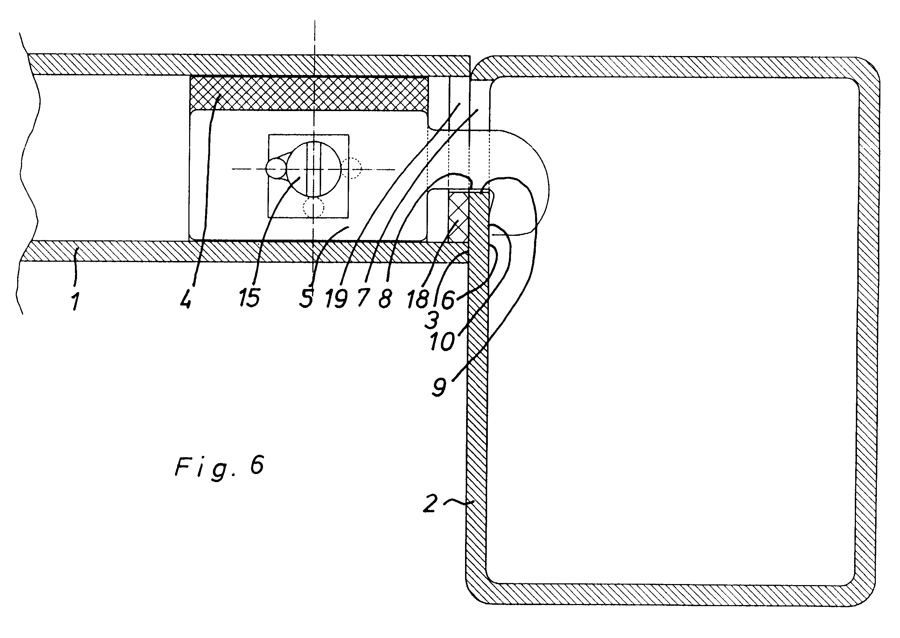

Das andere Element 2 bildet eine Platte 6 (Fig. 1, 6 u. 7), die Durchtrittsöffnungen 7 für den Haken 5 hat und die zur Anlage der Anlagefläche 3 des einen Elementes 1 dient.

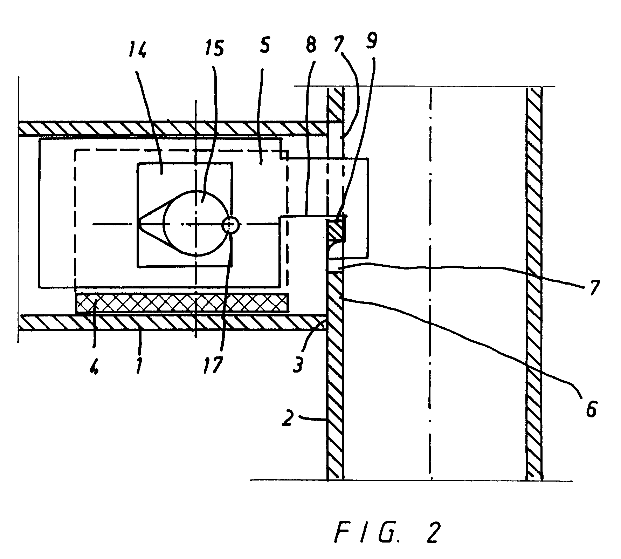

Wie insbesondere die Fig. 1 und 2 zeigen, haben die Haken 5 eine Lagerfläche 8, denen Auflagerflächen 9 der Platte 3 zugeordnet sind. Die Haken 5 haben ferner eine in Winkel von 90° zur Lagerfläche 8 verlaufende Haltefläche 10. Die Haltefläche der Haken 5 wirkt mit einer Widerlagerfläche 11 der Platte 3 (Fig. 1) zusammen, die gleichfalls im rechten Winkel zur Auflagerfläche 9 der Platte verläuft.

Wie die Figuren zeigen, sind die Haken 5 derart U-förmig ausgebildet, daß sie im Abstand zur Lagerfläche 8 eine Anschlagfläche 12 (Fig. 1) haben, die parallel zur Lagerfläche 8 verläuft. Die Anschlagfläche 12 wirkt mit einer Verriegelungsfläche 13 (Fig. 1) der Platte 3 zusammen, die ihrerseits parallel und im Abstand zur Auflagerfläche 9 verläuft.

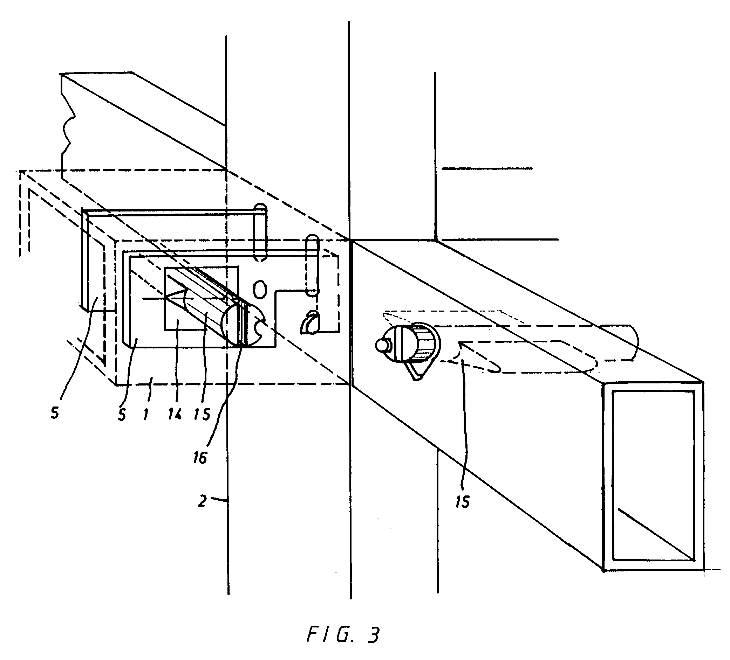

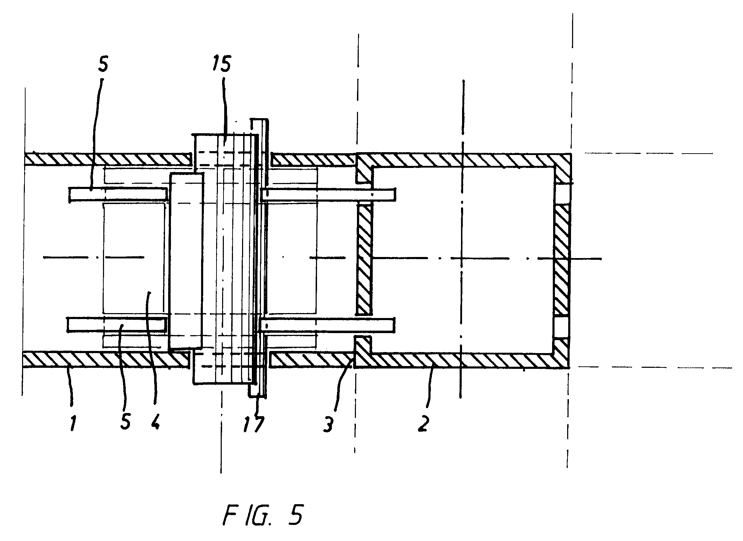

Wie die Figuren weiter zeigen, haben die Haken 5 und die Halteführung 4 Ausnehmungen 14, in denen ein Exzenter-Nocken 15 angeordnet ist, der im Element 1 drehbar gelagert ist (Fig. 5). Durch eine Drehung des Exzenter-Nockens 15, der dazu einen Schlitz 16 zum Einsatz eines Schraubenziehers hat (Fig. 3), werden die Haken in Längsrichtung des Elementes 1 hin und her bewegt.

Wie insbesondere die Fig. 2 und 5 zeigen, hat der Exzenter-Nocken 15 eine Ausnehmung, in die ein federbelasteter Stift 17 der Führung einrastet.

In der in Fig. 1 dargestellten entriegelten Stellung sind die Haken 5 durch den Exzenter-Nocken 15 aus dem Element 1 herausgeschoben, so daß das Element 1 mit seinem Haken 5 durch die Durchtrittsöffnungen 7 der Platte 6 mit dem Element 2 verbindbar ist.

Durch Drehen des Nockens 15 um 180° werden die Haken 5 in das Element 1 zurückgezogen, so daß die Haken 5 mit der Platte 6 des anderen Elementes 2 verriegelt sind, wie dies in Fig. 2 dargestellt ist. Der Exzenter-Nocken 15 wird dabei durch den federbelasteten Stift 17 in dieser Stellung verriegelt.

Wie die Figuren, insbesondere die Fig. 2 und 3 zeigen, sind in dieser verriegelten Stellung die Elemente 1 und 2 kraft- und formschlüssig in allen Richtungen fest miteinander verbunden, so daß eine hohe Festigkeit der Verbindung gegeben ist.

Bei der Ausführungsform einer erfindungsgemäßen Vorrichtung nach den Fig. 6 und 7 ist auf der Platte 6 als Verriegelungselement eine Arretierscheibe 18 befestigt, die gleichfalls eine Durchtrittsöffnung 19 für den Haken 5 hat.

Die Arretierscheibe 18 weist die gleichen Abmessungen wie der Innenquerschnitt des einen Elementes 1 auf, so daß das Element 1 in aufgeschobener verriegelter Stellung durch die Arretierscheibe 18 in allen Richtungen verwindungsfest und formschlüssig gehalten ist. Dadurch ergibt sich für den Haken 5 nur noch eine Zugbelastung. Vorteilhaft ist die Arretierscheibe 18 durch Verschweißen, Verkleben od. dgl. mit der Platte 6 fest verbunden.

In den Fig. 1 bis 9 sind stets rechtwinklige Verbindungen gezeigt. Es sind jedoch auch andere Winkelstellungen der Elemtene 1 und 2 zueinander möglich, in dem die Anschlagfläche 3 entsprechend ausgebildet wird.

## Patentansprüche

1. Vorrichtung zum Verbinden und Verriegeln zweier Elemente, bei der das eine Element (1) an seinem Verbindungsende eine stirnseitige Anlagefläche (3) und einen Haken (5) hat, der die Anlagefläche (3) überragt und der eine Haltefläche (10) hat, und bei der das andere Element (2) eine Platte (6) zur Anlage der stirnseitigen Anlagefläche (3) des einen Elementes (1) hat, die Durchtrittsöffnungen (7) für den Haken (5) und eine Widerlagerfläche (11) für die Haltefläche (10) des Hakens (5) hat, wobei eine Fläche (8) des Hakens (5) einer Fläche (9) der Durchtrittsöffnung (7) zugeordnet ist und wobei in dem einen Element (1) ein Exzenter-Nocken (15) drehbar und arretierbar angeordnet ist, der zur Verschiebung des Hakens (5) in eine zugeordnete Ausnehmung (14) des Hakens eingreift, dadurch gekennzeichnet, daß auf der Platte (6) des anderen Elementes (2) eine die Platte überragende Arretierscheibe (18) mit Durchtrittsöffnungen (19) für den Haken (5) fest angeordnet ist, die in verriegelter Stellung der Elemente formschlüssig in eine zugeordnete stirnseitige Ausnehmung der Anlagefläche (3) des einen Elementes (1) eingreift.

2. Vorrichtung nach Anspruch 1, dadurch gekennzeichnet, daß die Arretierscheibe (18) mit der Platte (6) des anderen Elementes (2) verklebt oder fest verbunden ist.

3. Vorrichtung nach Anspruch 1 oder 2, dadurch gekennzeichnet, daß die zu verriegelnden Elemente (1, 2) Hohlprofile sind und die Arretierscheibe (18) gleich dem Innenquerschnitt der Hohlprofile ausgebildet ist.

4. Vorrichtung zum Verbinden und Verriegeln zweier Elemente, bei der das eine Element (1) an seinem Verbindungsende eine stirnseitige Anlagefläche (3) und einen Haken (5) hat, der die Anlagefläche überragt und der eine Lagerfläche (8) und eine im Winkel dazu angeordnete Haltefläche (10) hat, und bei der das andere Element (2) eine Platte (6) zur Anlage der Anlagefläche des einen Elementes (1) hat, die Durchtrittsöffnungen (7) für den Haken (5), eine Auflagefläche (9) für die Lagerfläche (8) des Hakens (5) und eine Widerlagerfläche (11) für die Haltefläche (10) des Hakens (5) hat, wobei in dem einen Element (1) ein Exzenter-Nocken (15) drehbar und arretierbar angeordnet ist, der zur Verschiebung des Hakens (5) in eine zugeordnete Ausnehmung (14) des Hakens (5) eingreift, dadurch gekennzeichnet, daß der Haken (5) derartig U-förmig ausgebildet ist, daß er im Abstand zur Lagerfläche (8) eine Anschlagfläche (12) aufweist, die in verriegelter Stellung des Hakens an einer zugeordneten Verriegelungsfläche (13) der Platte (6) des anderen Elementes (2) anliegt.

5. Vorrichtung nach Anspruch 4, dadurch gekennzeichnet, daß die Lagerfläche (8) und die Haltefläche (10) des Hakens (5) in einem Winkel von 90° zueinander angeordnet sind.

6. Vorrichtung nach Anspruch 5 oder 6, dadurch gekennzeichnet, daß die Anschlagfläche (12) im Haken (5) parallel und im Abstand zur Lagerfläche (8) verlaufend angeordnet ist.

7. Vorrichtung nach einem der Ansprüche 4 bis 6, dadurch gekennzeichnet, daß die Auflagefläche (9) und die Widerlagerfläche (11) in der Platte (6) des anderen Elementes (2) in einem Winkel von 90° zueinander angeordnet sind.

8. Vorrichtung nach einem der Ansprüche 4 bis 7, dadurch gekennzeichnet, daß die Auflagerfläche (9) und die Verriegelungsfläche (13) der Platte (6) im Abstand und parallel zueinander verlaufend angeordnet sind.

9. Vorrichtung nach einem der Ansprüche 4 bis 9, dadurch gekennzeichnet, daß der Haken (5) in einem Winkel von 90° zur Anlagefläche (3) im Element (1) angeordnet ist.

10. Vorrichtung nach einem der Ansprüche 1 bis 9, dadurch gekennzeichnet, daß der Exzenter-Nocker (15) in Arretierstellung von einem federbelasteten Stift (17) od.dgl. gehalten ist.

11. Vorrichtung nach einem der Ansprüche 1 bis 10, dadurch gekennzeichnet, daß im Element (1) zwei Haken (5) im Abstand und parallel zueinander geführt sind.

12. Vorrichtung nach einem der Ansprüche 1 bis 11, dadurch gekennzeichnet, daß der bzw. die Haken (5) in einer Halteführung (4) verschiebbar angeordnet sind, die in einer Ausnehnung eines Elementes (1) einsetzbar ist.

13. Vorrichtung nach Anspruch 12, dadurch gekennzeichnet, daß die Halteführung (4) und die Haken (5) im Element (1) durch den drehbar im Element angeordneten Exzenter-Nocken (15) gehalten sind.

14. Vorrichtung nach Anspruch 12 oder 13, dadurch gekennzeichnet, daß der federbelastete Stift (17) od.dgl. in der Halteführung (4) angeordnet ist.

## Claims

1. Apparatus for connecting and interlocking two elements, where the one element (1) has at its connecting end a frontal contact surface (3) and a hook (5) which projects past the contact surface (3) and which has a holding surface (10), and where the other element (2) has a plate (6) for locating the frontal contact surface (3) of the first element (1), said plate having through-openings (7) for the hook (5) and an abutment surface (11) for the holding surface (10) of the hook (5), and one surface (8) of the hook (5) being associated with one surface (9) of the through-opening (7) and there being rotatably and lockably arranged in the first element (1) an eccentric cam (15) which engages in an associated recess (14) in the hook so as to displace the hook (5), characterised in that permanently arranged on the plate (6) of the other element (2) is a locking disc (18) which projects past the plate and incorporates through-openings (19) for the hook (5), said locking disc (18) engaging in a form fit in an associated frontal recess in the contact surface (3) of the first element (1) when the elements are in the interlocked position.

2. Apparatus according to claim 1, characterised in that the locking disc (18) is glued or permanently joined to the plate (6) of the other element (2).

3. Apparatus according to claim 1 or 2, characterised in that the elements (1, 2) to be interlocked are hollow profiles and the locking disc (18) is identical in construction to the internal cross-section of the hollow profiles.

4. Apparatus for connecting and interlocking two elements, where the one element (1) has at its connecting end a frontal contact surface (3) and a hook (5) which projects past the contact surface and which has a bearing surface (8) and a holding surface (10) arranged at an angle thereto, and where the other element (2) has a plate (6) for locating the frontal contact surface (3) of the first element (1), said plate having through-openings (7) for the hook (5), a supporting surface (9) for the bearing surface (8) of the hook (5), and an abutment surface (11) for the holding surface (10) of the hook (5), and there being rotatably and lockably arranged in the first element (1) an eccentric cam (15) which engages in an associated recess (14) in the hook so as to displace the hook (5), characterised in that the hook (5) is of U-shaped construction, such that at a distance from the bearing surface (8) it has a stop surface (12) which bears against an associated interlocking surface (13) of the plate (6) of the other element (2) when the hook is in the interlocked position.

5. Apparatus according to claim 4, characterised in that the bearing surface (8) and the holding surface (10) of the hook (5) are set at a 90° angle to one another.

6. Apparatus according to claim 5 or 6, characterised in that the stop surface (12) is set parallel in the hook (5) and at a distance from the bearing surface (8).

7. Apparatus according to any of claims 4 to 6, characterised in that the supporting surface (9) and the abutment surface (11) are set in the plate (6) of the other element (2) at a 90° angle to one another.

8. Apparatus according to any of claims 4 to 7, characterised in that the supporting surface (9) and the interlocking surface (13) of the plate (6) are set at a distance from and parallel to one another.

9. Apparatus according to any of claims 4 to 8, characterised in that the hook (5) is set at an angle of 90° to the contact surface (3) in the element (1).

10. Apparatus according to any of claims 1 to 9, characterised in that the eccentric cam (15) is held in the locking position by a spring-loaded pin (17) or similar.

11. Apparatus according to any of claims 1 to 10, characterised in that two hooks (5) are arranged at a distance from and parallel to one another in the element (1).

12. Apparatus according to any of claims 1 to 11, characterised in that the hook or hooks (5) are set so as to slide in a holding guideway (4) which can be inserted in a recess in one element (1).

13. Apparatus according to claim 12, characterised in that the holding guideway (4) and the hooks (5) are held in the element (1) by the eccentric cam (15) set so as to be able to rotate in the element.

14. Apparatus according to claim 12 or 13, characterised in that the spring-loaded pin (17) or similar is set in the holding guideway (4).

## Revendications

1. Dispositif pour l'assemblage et le verrouillage réciproques de deux éléments, dans lequel l'un des éléments (1) présente, sur son extrémité d'assemblage, une face d'application (3) du côté frontal et un crochet (5) qui fait saillie sur la face d'application (3) et présente une face d'appui (10), et dans lequel l'autre élément (2) comprend une plaque (6) pour l'application de la face d'application (3) côté frontal du premier élément (1), ladite plaque (6) étant munie de trous de passage (7) pour le crochet (5) et d'une face de contre-appui (11) pour la face de maintien (10) dudit crochet (5), une face (8) du crochet (5) étant associée à une face (9) du trou de passage (7), tandis qu'à l'intérieur du premier élément (1) est disposée, de manière rotative et pouvant être bloquée, une came excentrique (15) qui, pour faire coulisser le crochet (5), pénètre dans une encoche correspondante (14) dudit crochet, caractérisé en ce que sur la plaque (6) du second élément (2) est disposé, de manière fixe, un disque d'arrêt (18) faisant saillie sur la plaque et muni de trous de passage (19) pour le crochet (5), ce disque pénétrant, dans la position de verrouillage réciproque des deux éléments, dans une encoche correspondante du côté frontal de la face d'application (3) du premier élément (1) dont il épouse la forme.

2. Dispositif selon la revendication 1, caractérisé en ce que le disque d'arrêt (18) est assemblé par collage ou fixé rigidement à la plaque (6) du second élément (2).

3. Dispositif selon la revendication 1 ou 2, caractérisé en ce que les éléments (1, 2) à verrouiller réciproquement sont des profilés creux et en ce que le disque d'arrêt (18) présente une forme analogue à la section transversale intérieure de ces profilés creux.

4. Dispositif pour l'assemblage et le verrouillage réciproques de deux éléments, dans lequel l'un des éléments (1) présente, sur son extrémité d'assemblage, une face d'application (3) du côté frontal et un crochet (5) lequel fait saillie sur ladite fdace d'application et présente une face d'appui (8), ainsi qu'une face de support (10) formant un angle avec la face (8), l'autre élément (2) présentant une plaque (6) pour l'application de la face d'application du premier élément (1) laquelle est munie de trous de passage (7) pour le crochet (5), d'une face d'application (9) pour la face d'appui (8) du crochet (5) et une face de contre-appui (11) pour la face support (10) dudit crochet (5), tandis que dans le premier élément (1) est disposée de manière rotative et pouvant être bloquée une came excentrique (15) laquelle, pour faire coulisser le crochet (5), pénètre dans une encoche correspondante (14) dudit crochet (5), caractérisé en ce que le crochet (5) est réalisé en forme de U de telle sorte qu'il présente, à une certaine distance de la face d'appui (8), une face de butée (12) qui, en l'état verrouillé du crochet, vient s'appliquer contre une face de verrouillage correspondante (13) de la plaque (6) du second élément (2).

5. Dispositif selon la revendication 4, caractérisé en ce que la face d'appui (8) et la face support (10) du crochet (5) sont disposées de manière à former entre elles un angle de 90°.

6. Dispositif selon la revendication 5 ou 6, caractérisé en ce que la face de butée (12) est disposée dans le crochet (5) parallèlement à une certaine distance de la face d'appui (8).

7. Dispositif selon l'une des revendications 4 à 6, caractérisé en ce que la face d'appui (9) et la face de contre-appui (11) sont disposées dans la plaque (6) du second élément (2) de manière à former entre elles un angle de 90°.

8. Dispositif selon l'une des revendications 4 à 7, caractérisé en ce que la face d'appui (9) et la face de verrouillage (13) de la plaque (6) sont disposées parallèlement et à une certaine distance l'une de l'autre.

9. Dispositif selon l'une des revendications 4 à 8, caractérisé en ce que le crochet (5) est disposé dans l'élément (2) en formant un angle de 90° avec la face d'appui (3).

10. Dispositif selon l'une des revendications 1 à 9, caractérisé en ce que la came excentrique (15) est maintenue en position d'arrêt par une tige (17) chargée d'un ressort ou analogue.

11. Dispositif selon l'une des revendications 1 à 10, caractérisé en ce que dans l'élément (1) deux crochets (5) sont disposés parallèlement et à une certaine distance l'un de l'autre.

12. Dispositif selon l'une des revendications 1 à 11, caractérisé en ce que le ou les crochets (5) sont disposés de manière à coulisser dans un guidage (4) qui peut être inséré dans un trou du premier élément (1).

13. Dispositif selon la revendication 12, caractérisé en ce que le guidage (4) et le crochet (5) sont maintenus dans l'élément (1) par la came excentrique (15) disposée de manière rotative dans cet élément.

14. Dispositif selon la revendication 12 ou 13, caractérisé en ce que la tige (17) chargée d'un ressort ou analogue, est disposée dans le guidage (4).
